# EUROPEAN PATENT SPECIFICATION

(11) **EP 1 419 454 B1**
(45) Date of publication and mention of the grant of the patent: **07.02.2007**
(21) Application number: 00953129.4
(22) Date of filing: 31.07.2000
(51) Int. Cl.: G06F 17/30

(54) **SEMANTIC CACHING**
SEMANTISCHES ZWISCHENSPEICHERN
ANTEMEMORISATION SEMANTIQUE

(30) Priority: 16.08.1999 US 374694
(43) Date of publication of application: 19.05.2004
(73) Proprietor: Koninklijke Philips Electronics N.V., 5621 BA Eindhoven (NL)
(72) Inventor: DHARAP, Chanda, NL-5656 AA Eindhoven (NL)
(74) Representative: de Haas, Laurens Johan
(86) International application number: PCT/EP2000/007412
(87) International publication number: WO 2001/013265

(56) References cited:
- EP-A- 0 961 210
- WO-A-00/77664
- WO-A-99/36869
- CHIDLOVSKII B ET AL: "Semantic cache mechanism for heterogeneous Web querying" COMPUTER NETWORKS, ELSEVIER SCIENCE PUBLISHERS B.V., AMSTERDAM, NL, vol. 31, no. 11-16, 17 May 1999 (1999-05-17), pages 1347-1360, XP004304559 ISSN: 1389-1286
- SH. DAR, M. J. FRANCLIN, B. T. JÓNSSON, D. SRIVASTAVA, M. TAN: "Semantic Data Caching and Replacement" PROCEEDINGS OF THE 22ND VLDB CONFERENCE, 1996, pages 1-12, XP002261689 Mumbai (Bombay)

## Description

This invention relates to the field of information processing systems, and in particular to information processing systems that utilize cache memory to minimize latency.

Cache systems are common in the art. A cache system comprises a cache memory and a corresponding controller that regulates the storage and retrieval of information to and from the cache memory. Traditionally, the cache memory is filled with copies of information resources that a user receives from a remote source, "remote" being defined as being further removed from the user than the cache memory, e.g., local main memory or a server in a client-server architecture. If the user subsequently requests the same resource, the resource's copy is provided from the cache memory, rather than from the original remote source, thereby saving the time required to receive the resource from the remote source for a second time. When the cache memory becomes full, the cache controller removes copies of the resources that have not been accessed recently, to make room for copies of new resources that the user accesses. A variety of criteria, commonly termed caching policies, are available to determine which resource copy to remove from the cache memory. Such caching policies can be based on: the duration since the last access, the number of times accessed since originally received, the amount of memory allocated to the resource, the difficulty of retrieving the resource from the remote site, etc.

The following publications disclose examples of caching systems: Chidlovskii B et al., "Semantic cache mechanism for heterogeneous Web querying", Computer Networks, Elsevier Science Publishers B.V., Amsterdam, NL, vol.31, no. 11-16, 17 May 1999, pages 1347-1360; Sh. Dar, M.J. Franclin, B.T. Jónsson, D. Srivastava, M.Tan, "Semantic Data Caching and Replacement", Proceedings of the 22bd VLDB Conference, 1996, pages 1-12; and US patent 5,848,410.

Chidlovskii B et al., disclose a semantic cache mechanism for heterogeneous Web querying. To overcome the drawbacks of page and tuple caching when querying Web sources, semantic cache has been proposed by different researchers. This approach manages the client cache as a collection of semantic regions. A semantic region groups together semantically related data covered, for example, by a user query. Moreover, the access information and cache replacement are managed at a unit of semantic regions. The client cache manages a collection of semantic regions grouping together semantically related data, such as the answer to a user query.

Sh. Dar et al., disclose a semantic caching model that is based on, and derives its advantages from, three key ideas. First, the client maintains a semantic description of the data in its cache, instead of maintaining a list of physical pages or tuple identifiers. Query processing makes use of the semantic descriptions to determine what data are locally available in the cache, and what data are needed from the server. The data needed from the server are compactly specified as a remainder query. Remainder queries provide reduced communication requirements and additional parallelism compared to faulting-based approaches. Second, the information used by the cache replacement policy is maintained in an adaptive fashion for semantic regions, which are associated with sets of tuples. These sets are defined and adjusted dynamically based on the queries that are posed at the client. The use of semantic regions avoids the high storage overheads of the tuple caching approach of maintaining replacement information on a per-tuple basis and, unlike the page caching approach, is also insensitive to bad clustering of tuples on pages. Third, maintaining a semantic description of the data in the cache encourages the use of sophisticated value functions, in determining replacement information. Value functions that incorporate semantic notions of locality can be devised for traditional query-based applications as well as for emerging applications such as mobile database.

US patent 5,848,410 presents its approach as follows. To improve access to documents in a large database, such as the World Wide Web of the Internet or a group intranet, a continuously updated computer organization and display system, and a method for such an organization and display system, is provided to quickly locate desired documents without generating references to undesired documents, and to quickly allow a user to determine if any documents of interest are available. In one embodiment, such organization and display system includes data structures for storing and processing information extracted from the header lines of web pages in file systems chosen by a user. Linked lists are created in such data structures to allow rapid construction and display of an alphabetical index of keywords from such header lines, each keyword having associated with it a title extracted from the same web-page header. The alphabetical index by keywords may be displayed on a file that permits the user readily to jump to a desired location in the alphabetical index. Alternatively, the user may search the alphabetical index to find titles or keywords that correspond with an entered character string. A user may select a title in the index and view the file from which the title was extracted.

Cache systems are premised on the assumption that the information at the remote source has not changed when the resource copy in the cache is accessed. That is, the resource copy in the cache should not be used in lieu of the resource at the remote source if the resource at the remote source has changed. Thus, in addition to removing copies of resources from the cache memory when it is full, the cache controller in a conventional system also removes copies of resources from the cache memory when it is predicted or determined that the source information has changed, because the copy of the resource in the cache memory is outdated, or "stale". The prediction of whether a resource is likely to have changed is also often used in the selection of which resource copy to remove when space becomes unavailable in the cache memory. For example, an image at a web-site may be expected to change less often than text at a web-site, and thus, a cache controller for caching information downloaded from the Internet may retain downloaded image information for a longer average duration than downloaded text information.

Each particular caching policy typically involves tradeoffs between: the likelihood that a user will re-access a particular resource copy rather than another resource copy; the likelihood that the particular resource copy is stale; the likelihood that the copies of other resources are stale; and so on. Consider, for example, a "Least Recently Used" (LRU) caching policy, and a "First In, First Out" (FIFO) caching policy. The LRU caching policy selects the copies of the resources to be removed from cache memory based on an assumption that if a user has not re-accessed a resource in a long time, it is likely that the user is not going to re-access the resource. The FIFO caching policy, on the other hand, is independent of how often or how recently the user re-accesses a resource, and is based on an assumption that the longer the resource copy has been in cache memory, the more likely it is to be stale. With a FIFO caching policy, copies of commonly re-accessed resources are often needlessly reloaded from the remote source, merely because they were in the cache memory longer than other, potentially rarely re-accessed, resources. Resources from an information source that contains information that changes frequently, on the other hand, is likely to be accessed by a user more frequently than an information source that contains relatively static information. If an LRU caching policy is employed, the cached copy will tend to remain in the cache memory too long, because it is frequently accessed.

In general terms, copies of resources are received from a remote source, and the cache controller determines which copy to retain in cache memory in an attempt to minimize the latency delay for subsequent accesses to that resource, while at the same time attempting to maximize the correspondence, or synchronization, between the content of the copy in the cache memory and the content of the resource at the remote source.

It is an object of this invention to provide a method and system for, among other things, controlling a cache memory to minimize access latency. It is a further object of this invention to provide a method and system that optimizes the allocation of cache memory.

These objects and others are achieved by providing an information processing system comprising a processor that receives a request from a user for an information resource. The system also comprises a retriever, operably coupled to the processor, that facilitates a reception of a copy of the resource from a remote site. The system further has a cache system, operably coupled to the processor, that facilitates storage and retrieval of the copy of the resource. The cache system comprises a cache memory for storing the copy, and a cache controller operably coupled to the cache memory for control of subjecting the copy in the cache memory to a respective caching policy in dependence upon a respective semantic type of the resource. The system is characterized in that the respective semantic type is indicative of a respective degree of volatility of information content of the information resource. A resource copy received from a remote source, e.g., from a server via the Internet, is categorized by its semantic type. The caching policy is customized for each semantic type, using different policies for different semantic types. The expression "semantic type" as used within this context refers to the different connotative meanings that the information contents of resources can have, as perceived by the user. For example, some information content may be perceived as highly volatile (e.g., being of short-term relevance such as web sites dedicated to the results of sport matches, to specific stock market news or currency exchange rates), other information content may be perceived as rather static (e.g., being of long-term relevance such as glossaries on the Internet). Semantic types that can be expected to contain dynamic information, such as news Web sites and weather Web sites, need a caching policy wherein the copy in the cache memory is selected for replacement based upon the duration of time that the copy has been in the cache memory. Conversely, semantic types that can be expected to relate to static resources, such as encyclopedic information, glossaries, etc., need a more conservative caching policy, such as least- recently-used (LRU) or least-frequently-used (LFU), that are substantially independent of the time duration that the copy remains in the cache memory. Additionally, some semantic types, such as communicated news messages in popular newsgroups or e-mail messages in e-mail archives may employ a combination of caching policies wherein the copy of the resource, or copies of parts of the resource, are initially identified as dynamically changing, then less dynamic, then static.

The relationship between semantic content type and caching policy to be associated with the type can be determined in advance, e.g., by the resource provider, or may be determined directly by the user, or could be based, at least partly, on user-history and profiling of user-interaction with the resources.

The invention also relates to a method of processing an information resource, e.g., as supplied by a service provider on the Internet. The method comprises receiving a copy of the information resource from a remote source, and subjecting the copy of the information resource to a respective caching policy in dependence upon a respective semantic type associated with the information resource. The method is characterized in that the respective semantic type is indicative of a respective degree of volatility of information content of the information resource. An indication may be supplied that is representative of the semantic type of an Internet Web site. The indication can be a meta tag that with an indication that gets interpreted at the user's client for use as a cache control parameter.

Chidlovskii B et al., briefly discussed above, discloses a caching mechanism based on the semantics of the contents of the data. Chidlovskii B et al., discloses a caching per unit of semantic region, i.e., a collection of semantically related data. Chidlovskii B et al., neither teaches nor suggests applying different caching policies depending on different semantic types of the information resources. Chidlovskii B et al., neither teaches nor suggests different caching policies based on different degrees of perceived volatility of the resources' content.

Sh. Dar et al., briefly discussed above, teaches operating on the query based semantics of the data. Sh. Dar et al., neither teaches nor suggests applying different caching policies depending on different semantic types of the information resources. Sh. Dar et al., neither teaches nor suggests different caching policies based on different degrees of perceived volatility of the resources' content.

US patent 5,848,410, briefly discussed above, neither teaches nor suggests applying different caching policies depending on different semantic types of the information resources. US patent 5,848,410 neither teaches nor suggests different caching policies based on different degrees of perceived volatility of the resources' content.

The invention is explained in further detail, and by way of example, with reference to the accompanying drawings wherein:
FIG. 1 illustrates an example block diagram of a semantic caching system of the invention.
FIG. 2 illustrates an example flow diagram for satisfying a user request using a cache memory system in the invention.
FIG. 3 illustrates an example flow diagram for the storage of resources in a cache memory system in the invention.
Throughout the drawings, same reference numerals indicate similar or corresponding features or functions.

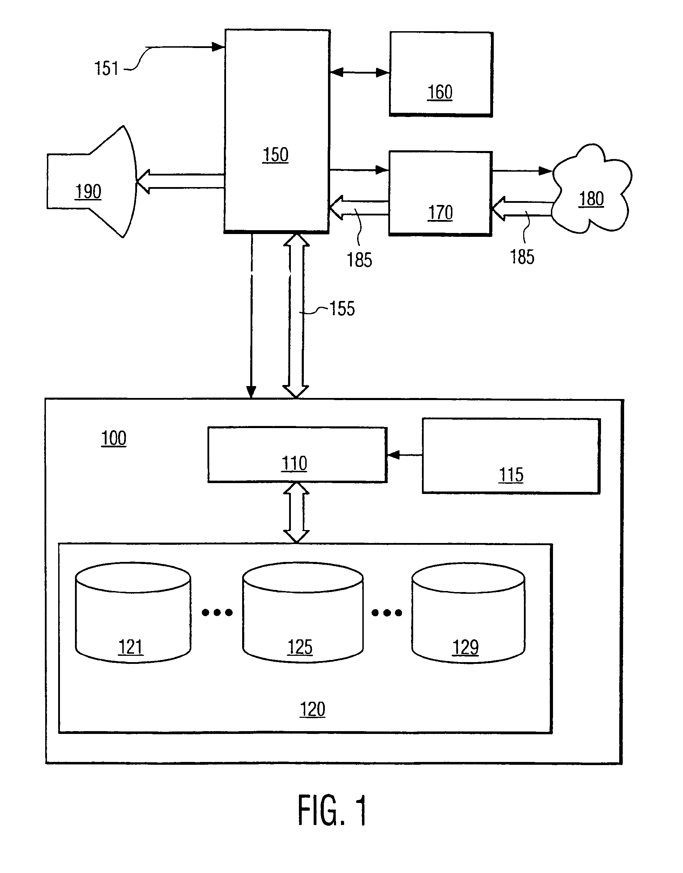

FIG. 1 illustrates an example block diagram of a semantic cache system 100 in the invention. The cache system 100 includes a cache controller 110, a cache memory 120 that is partitioned into different caches 121-129, and a set of parameters and rules 115 associated with each cache 121-129 and each semantic category. Physically, the cache memory 120 may be distributed among a variety of storage devices, or it may be a single block of memory, a partition of a disk drive, and so on; the caches 121-129 are logical partitions of the cache memory 120. Each cache 121-129 has a different caching policy. Cache 121 is a highly active cache, while cache 129 is a very stable cache; optionally, other intermediate activity cache partitions 125 are also provided. According to the invention, a copy of a resource is placed in a particular cache 121-129 in dependence upon the semantic type of the resource. Each of the caches has a corresponding set of parameters and rules 115, or caching policies, that control the storage duration and replacement of resource copies for the particular cache. A highly active cache 121, for example, employs replacement rules wherein the staleness of the content (the time since the copy was retrieved from the remote source) is the primary criterion used for determining which copy to replace. In a preferred embodiment of this invention, the parameters and rules 115 associated with the highly active cache 121 also impose a maximum staleness duration for each cached copy. Conversely, a very static cache 129 uses a more conventional set of parameters and rules 115 to effect, for example, a Least Recently Used (LRU) replacement strategy that is independent of the staleness of the resource's content.

In accordance with the invention, the semantic type of the resource determines in which one of caches 121-129 to place a specific copy of a resource that is retrieved, or downloaded, from a remote source, such as a site on the world-wide-web 180. For example, a weather report will be placed in a highly active cache 121, whereas an article from an encyclopedia will be placed in the very static cache 129. In like manner, copies of resources of other semantic types, such as news articles, stock reports, search results, e-mail messages, and so on, will each be allocated to an appropriate one of caches 121-129, based upon the dynamics of the semantic type.

A request processor 150 adds and retrieves the resource material 155 to and from the cache system 100 in response to user requests 151.

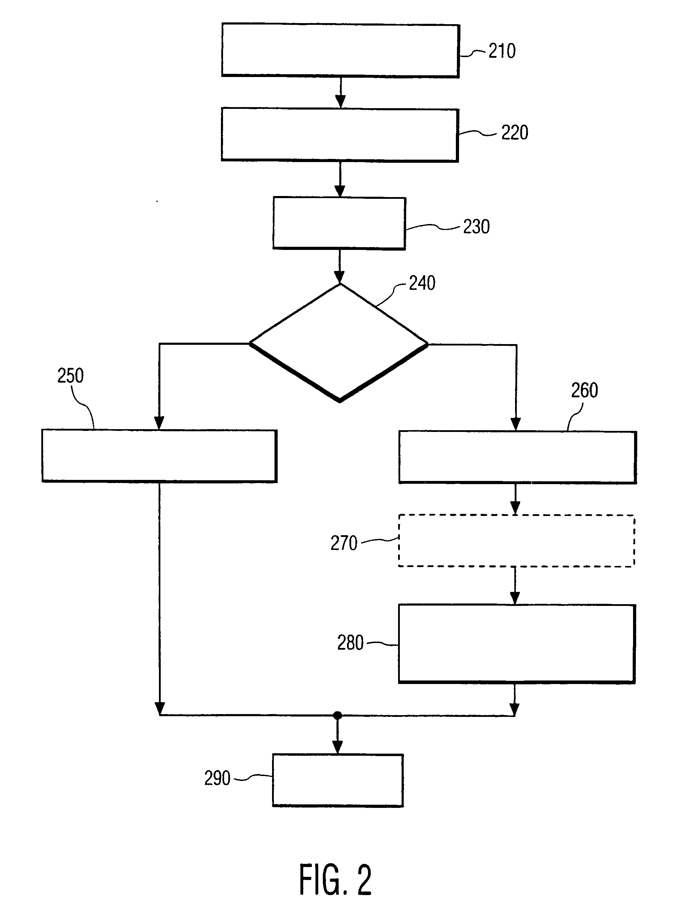

FIG. 2 illustrates an example flow diagram for satisfying a user request 151. Based initially upon the user request that is received, at 210, the semantic type of the requested resource is determined, at 220, via the semantic classifier 160. A variety of techniques are available for determining the semantic classification. In an embodiment of this invention, the user is queried for the category in which to place the requested information; thereafter, similar requests are categorized in like manner without an explicit query. Similarly, default semantic categories may be defined for commonly occurring request styles or formats or based on context, such as the application from which the request is generated. Co-pending U.S. patent application "CONTEXT-BASED AND USER PROFILE DRIVEN INFORMATION RETRIEVAL", U.S. Serial No. 09/104,491 (attorney docket PHA 23,422), filed 6/25/98 for Chanda Dharap, now issued as US patent 6,256,633, relates to enabling a user to navigate through an electronic data base in a personalized manner, wherein a context is created based on a profile of the user. The profile is based on topical information supplied by the user in advance, as well as a history of previous accesses of the user to the data base. In like manner, the user profile, context, and prior requests can be used in this invention to determine a semantic type with minimal interaction required from the user. Co-pending U.S. patent application COOPERATIVE TOPICAL SERVERS WITH AUTOMATIC PREFILTERING AND ROUTING", U.S. Serial No. 09/221,951 (attorney docket PHA 23,606), filed 12/28/98 for Doreen Cheng, now issued as US patent 6,349,307, relates to an information organization and system that organizes documents for rapid and efficient search and retrieval based upon topical content, and is incorporated herein by reference. The information organization and retrieval system is optimized for the organization and retrieval of only those documents that are relevant to a given set of predefined topics. If a document does not have a topic that is included in the given set of topics, the document is excluded from the provided service. In like manner, if a document includes a topic that is specifically banned from the provided service, it is excluded. In this paradigm, the provider purposely limits the scope of the provided search and retrieval services, but in so doing provides a more efficient and effective service that is targeted to an expected user demand. The information organization and retrieval system also supports context-sensitive search and retrieval techniques, including the use of predefined or user-defined views for augmenting the search criteria, as well as the use of user specific vocabularies. In a preferred embodiment, the select set of topics are organized in multiple overlapping hierarchies, and a distributed software architecture is used to support the topic-based information organization, routing, and retrieval services. Documents may be relevant to one or more topics, and will be associated with each topic via the topical hierarchies that are maintained by the information servers. US patent 6,349,307 refers to statistically based algorithms, neural nets and genetic algorithms, and the like, all known in the art, for automatic categorization of documents.

A default semantic type may also be associated with each resource. For example, a service provider may pre-categorize resources as to their semantic type, by using a default association dependent upon the source of the resource, or by incorporating a semantic determinator into the "web-crawlers'' commonly used to organize resources by content upon retrieval. In like manner, a web-site manager may pre-categorize each resource available at the web-site. In general terms, a database that contains resources, or indexes to resources, may be configured to also contain a default semantic type associated with each resources, wherein the term database is used in the general sense to include any organized collection of material, including the Internet and the World-Wide-Web. Via such a database, the default semantic type is used except where the user specifically changes the semantic type, or where the user's prior behavior implies a change to the semantic type, or where another semantic type determinator, such as those discussed above, provides a different result.

At block 230 of FIG. 2, the cache system 100 of FIG. 1 is queried by the request processor 150 to determine whether the request can be satisfied by the cache system 100. The cache controller 110 responds to this query based upon the current status of the requested resource and the parameters and rules 115 associated with the particular cache. If the requested resource is not at the cache 100, either because a copy of the resource was never placed in the cache memory 120, or because the copy has subsequently been removed from the cache memory 120, the cache controller 110 notifies the request processor 150 that the request cannot be satisfied. Additionally, in accordance with this invention, the cache controller 110 determines the suitability of the resources that are currently in the cache memory, based on the parameters and rules 115 associated with each of the caches 121-129. For example, the highly active cache 121 may be used, for example, to store retrieved stock prices, and may have a "staleness" parameter 115 that specifies that any resource copy contained in the cache 121 that is older than fifteen minutes is deemed "stale", and irretrievable. An intermediately active cache 125 may be where copies of resources that are associated with a "news" semantic type are stored, and may have a staleness parameter 115 that specifies, e.g., a two hour limit before a resource is deemed stale and irretrievable. The static cache 129 will typically not have a staleness parameter associated with it, and will typically contain copies of resources that are associated with encyclopedic and semantic types that are substantially unchanged over time.

As noted above, each semantic type category has associated rules and parameters 115 for organizing and retrieving each resource copy within the cache memory 120. In a preferred embodiment, these rules and parameters 115 also include rules for transferring resource copies from one cache to another. Using the aforementioned news semantic type as an example, the rules 115 associated with the receipt of a news resource could be to place the resource copy in the highly active cache 121 until it is determined to be stale, or until it must be removed to make room for newer active material, and then move it the intermediately active cache 125, then to the highly static cache 129. Such a process is termed herein as a percolating cache process, wherein the resource copy eventually bubbles up through the caches and is deposited into the static cache. The percolating cache process may also contain a selection mechanism to determine that only select items are percolated into static cache, the remainder being discarded, or, conversely, to determine that select items are discarded, the remainder being percolated into static cache.

As is evident to one of ordinary skill in the art in view of this invention, prior art cache optimizations may also be employed within each of caches 121-129. For example, the rules for removing items from active cache 121 may be structured such that copies of relatively stable resources, such as images, remain in cache longer than more dynamic, or more easily retrievable, resources, such as text. In this manner, for example, if a news resource copy is discarded, then subsequently re-accessed, only the text and additional images need be re-downloaded, based:on the assumption that previously downloaded images contained in the resource will not have changed.

Returning to FIG. 2, at 240, if the cache system 100 can comply with the user request 151, the resource copy is retrieved from the cache memory 120, at 250. If the user request 151 cannot be satisfied via the cache system 100, the resource copy is retrieved from the remote source, such as the Internet and the World-Wide-Web, or other network source, at 260.

Optionally, at 270, the semantic type of the retrieved resource copy can be re-determined, or reassessed, based on the actual content of the resource. U.S. patent 6,349,307 "COOPERATIVE TOPICAL SERVERS WITH AUTOMATIC PREFILTERING AND ROUTING", referred to above, relates to classifying a document into one or more select topical clusters, based on the material contained within the document. For example, a user request 151 of FIG. 1 could have been determined to correspond to a news type, and the retrieved news resource copy 185 may contain a weather advisory. In accordance with this aspect of the invention, the retrieved news resource copy, or a portion thereof, may be stored in accordance with the rules 115 associated with weather related resources. In like manner, within each semantic type, other related criteria may be used to determine the appropriate cache for each resource copy. For example, some news resource copies may be archived in the static cache 129, while others may be temporarily stored in the highly active cache 121. For example, if the user request for a news resource is determined to be a request for current news, based, for example, on the aforementioned user profile, context, and prior requests, the retrieved information will be placed in the active cache 121. If, on the other hand, based on the context of the user request, the request processor 150 determines that the user request for a news resource is for any news on a particular subject, the retrieved news resource copies may be further segregated based on the content or other identification of the resource, and each resource copy will be placed in an appropriate one of caches 121-129 based on this further segregation. In a preferred embodiment, the origination date associated with each retrieved news resource copy is used to place copies of recently created news resources in active cache 121, and copies of older news resources in static cache 129. Conversely, if the semantic type associated with the resource is encyclopedic, the origination date would be substantially irrelevant to the determination of in which one of caches 121-129 to place the resource copy.

The retrieved resource copy is stored in the appropriate one (or ones) of caches 121-129 of the cache memory 120, at 280, and the process continues, at 290. Referring to FIG. 1, the retrieved resource copy 185, 155, from either the network 180, or the cache 100, respectively, is presented to the user via the presentation device 190. As illustrated in FIG. 1, the presentation device 190 is typically a display device, although other presentation devices, such as an audio or other sensory presentation device could be utilized, depending upon the particular resource being presented, or the preference of the user, for example, via a text-to-speech or speech-to-text process.

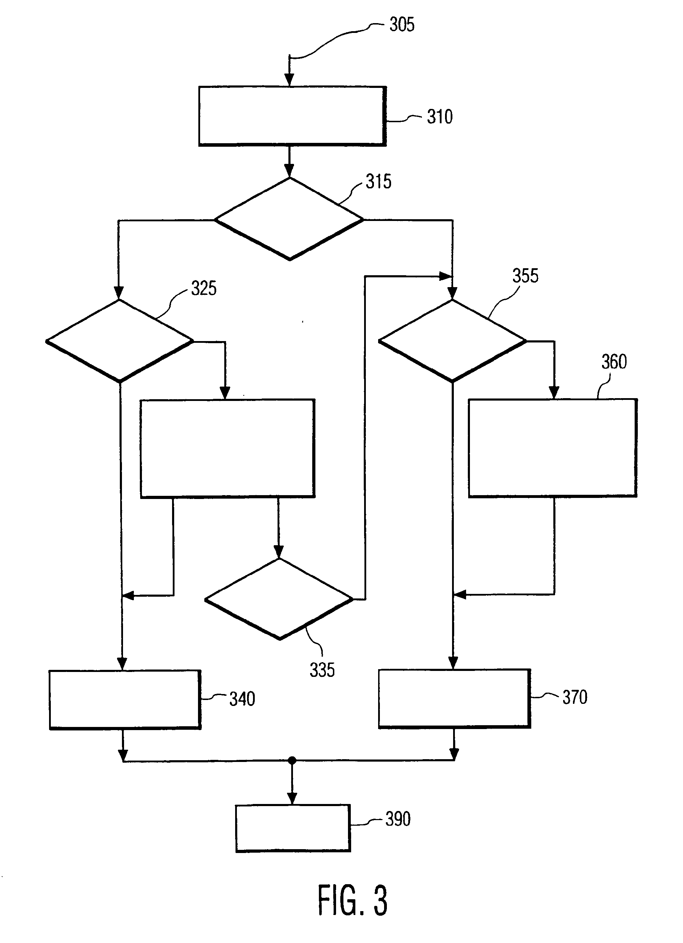

FIG. 3 illustrates an example flow diagram for the storage process of the cache system 100. In accordance with the invention, the operation of the cache system 100 depends upon the semantic type of the resource copy being stored. As discussed above, the semantic type is provided to the cache system 100 by the request processor 150, and is illustrated as an input 305 to the process of FIG. 3. For ease of understanding, the example flow diagram of FIG. 3 applies to a cache memory 120 that is partitioned into an active cache 121 and a static cache 129 only. The addition of one or more intermediately active caches 125, with varying degrees of dynamics, or staleness criteria, will be clear to one of ordinary skill in the art in view of this disclosure.

The semantic type 305 is used to determine the parameters and rules 115 associated with the storage of the resource, at 310. As illustrated in FIG. 3, the semantic type in a preferred embodiment determines whether the caching is to be active, static, or percolating. If the caching is static, at 315, the static cache 129 is checked to see if sufficient unallocated memory is available to store the resource copy, at 355. If sufficient unallocated memory is not available, a currently stored resource copy in the cache 129 is selected for removal, at 360. As noted above, the removal of a resource copy from static cache 129 is based on criteria that are substantially independent of the staleness of the resource. Any one of a variety of removal criteria may be employed, such as the removal of the least recently used (LRU) resource copy, the removal of the least frequently used (LFU) resource copy, and so on. After identifying or creating sufficient unallocated memory, the resource copy is stored in the static cache memory 129, at 370.

If, at 315, the caching is active or percolating, the active cache memory 121 is checked to see if sufficient unallocated memory is available to store the resource copy, at 325. If sufficient active storage is not available, previously stored resource copies are removed from the active cache memory 121, at 330, to provide sufficient unallocated active memory for storing the new resource copy. As discussed above, the criteria for selecting a resource to remove from the active cache 121 are highly dependent upon the staleness of each resource copy in the active cache 121. That is, because the copies of resources are placed in the active cache 121 based on the anticipated dynamics associated with their semantic type, older copies are preferably removed, independently, for example, of how recently, or how often, the particular resource has been re-accessed. If at 335, the previously stored resource copy was stored in active cache as the first phase of the aforementioned percolating process, it is transferred to the static cache 129, using the process described above, starting at decision block 335. The current resource copy is stored in the identified, or created unallocated active cache, at 340. After storing the resource copy in the appropriate cache 121, 129, the process continues, at 390.

The foregoing merely illustrates the principles of the invention. For example, the particular semantic type classifications used can be customized to each user or each application. The amount of cache memory 120 allocated to each cache 121-129 can be dynamically reallocated based on the effectiveness of the cache system 100 in fulfilling user requests. Also, the semantic type can be provided to the network retriever 170 to also reduce latency or improve retrieval efficiency and effectiveness by facilitating a network retrieval using a directed search based on the semantic type.

The specific structure and control flow illustrated in the figures are presented for illustrative purposes, and alternative structures and flows are feasible. For example, the function of the semantic classifier 180 may be embodied in the cache system 100, the request processor 150, or the network retriever 170. In like manner, all of the resource copies, for example, may be contained in a single cache structure, the logical partitioning of the cache memory being effected by the application of rules and parameters 115 that incorporate the dynamics of the semantic type as parameters associated with each stored resource copy. For example, each resource copy in the cache may have an associated individual staleness criterion, such as a maximum time duration in cache memory, that is determined by the semantic typ. The single caching a policy determines which resource copy to remove based on this staleness criterion, as well as other, more conventional cache criteria such as LRU, LFU, and so on. The determination of a resource copy to be removed in this embodiment is based upon a weighted averaging scheme that is strongly influenced by the staleness of resources having a low staleness criterion. In this manner, dynamic resources having a low staleness criterion, are selected more often for replacement as their time duration in cache increases. More stable resources that have a high staleness criterion are selected for removal from cache based on convention criteria, such as LRU and LFU, after stale copies of dynamic resources are no longer present in the cache. In like manner, a percolation parameter can be associated with each resource. The percolation parameter contains a non-zero value for resource copies that are to be percolated into less and less active storage, and a zero value for non-percolating resources. Periodically, the percolation parameter of each resource is added to each resource's staleness criterion, thereby periodically decreasing the likelihood of removing each percolating resource copy based on staleness. These and other system configuration and optimization features will be evident to one of ordinary skill in the art in view of this disclosure, and are included within the scope of the following claims.

## Claims

1. A method of processing an information resource (185), the method comprising receiving (260) a copy (155) of the information resource (185) from a remote source (180), and subjecting the copy (155) of the information resource (185) to a respective caching policy (280) in dependence upon a respective semantic type associated with the information resource (185), **characterized in that** the respective semantic type is indicative of a respective degree of volatility of information content of the information resource (185).

2. The method of claim 1, wherein
the caching (280) of the copy (155) comprises at least one of: a static caching, an active caching, and a percolating caching.

3. The method of claim 1, further including:
receiving (210) a request (151) from a user, and
determining (220) the semantic type based on the request (151) from the user.

4. The method of claim 3, wherein
the determining (220) of the semantic type includes at least one of:
determining a context of the request (151),
determining a prior request from the user,
determining a profile of the user, and
determining a response from the user to a result of a prior request.

5. The method of claim 1, further including:
determining (270) the semantic type based on an information content of the resource (185).

6. The method of claim 1, wherein
the remote source (180) comprises an Internet site.

7. An information processing system comprising:
a processor (150) that receives a request (151) from a user for an information resource (185),
a retriever (170), operably coupled to the processor (150), that facilitates a reception of a copy (155) of the resource (185) from a remote site, and
a cache system (100), operably coupled to the processor (150), that facilitates a storage and a retrieval of the copy (155) of the resource (185), the cache system (100) comprising: a cache memory (121-129) for storing the copy (155), and a cache controller (110) operably coupled to the cache memory (121 - 129) for control of subjecting the copy (155) in the cache memory (121-129)) to a respective caching policy (280) in dependence upon a respective semantic type of the resource (185), **characterized in that** the respective semantic type is indicative of a respective degree of volatility of information content of the information resource (185).

8. The system of claim 7, wherein
the cache memory (121-129) comprises a plurality of cache sections, and
the cache controller (110) selectively accesses a specific one of the cache sections in dependence upon the semantic type of the resource (185).

9. The system of claim 7, further including
a semantic classifier (160), operably coupled to the processor (150), that determines the semantic type of the resource (185).

10. The system of claim 9, wherein
the semantic classifier (160) determines the semantic type based on at least one of: a context of the user, a prior request of the user, a profile of the user, and a response from the user to a result of a previous request from the user.

11. The system of claim 9, wherein
the semantic classifier (160) determines the semantic type of the resource (185) based on a material content of the resource (185).

12. A database (180) comprising:
a plurality of indexes corresponding to a plurality of information resources, and
a plurality of default semantic types corresponding to the plurality of information resources that facilitates subjecting each respective information resource (185) of the plurality of information resources to a respective caching policy based on the respective default semantic type of each respective information resource (185), **characterized in that** the respective semantic type is indicative of a respective degree of volatility of information content of the respective information resource (185).

13. A Web page (180) comprising: an information resource (185), and an identification of a semantic type associated with the information resource (185) for controlling an automatic processing of the Web page, **characterized in that** the semantic type is indicative of a degree of volatility of an information content of the information resource (185).

## Patentansprüche

1. Verfahren zum Verarbeiten eines Informationsmittels (185), wobei das Verfahren Folgendes umfasst: das Empfangen (260) einer Kopie (155) des Informationsmittels (185) von einer fern liegenden Quelle (180), und das Aussetzen der Kopie (155) des Informationsmittels (185) einer betreffenden Zwischenspeichermethode (280) in Abhängigkeit von einem betreffenden semantischen Typ, assoziiert mit dem Informationsmittel (185), **dadurch gekennzeichnet, dass** der betreffende semantische Typ indikativ ist für einen betreffenden Grad an Flüchtigkeit von Informationsinhalt des Informationsmittels (185).

2. Verfahren nach Anspruch 1, wobei das Zwischenspeichern (280) der Kopie (155) wenigstens ein statisches Zwischenspeichern, ein aktives Zwischenspeichern oder ein filterndes Zwischenspeichern umfasst.

3. Verfahren nach Anspruch 1, das weiterhin Folgendes umfasst:
- das Empfangen (210) eines Antrags (151) von einem Benutzer, und
- das Ermitteln (220) des semantischen Typs auf Basis des Antrags (151) vom Benutzer.

4. Verfahren nach Anspruch 3, wobei die Ermittlung (220) des semantischen Typs wenigstens eines der nachfolgenden Vorgänge umfasst:
- das Ermitteln eines Kontextes des Antrags (151),
- das Ermitteln eines vorhergehenden Antrags von dem Benutzer,
- das Ermitteln eines Profils des Benutzers, und
- das Ermitteln einer Reaktion vom Benutzer auf das Ergebnis eines vorhergehenden Antrags.

5. Verfahren nach Anspruch 1, das weiterhin Folgendes umfasst:
- das Ermitteln (270) des semantischen Typs auf Basis eines Informationsinhaltes des Mittels (185).

6. Verfahren nach Anspruch 1, wobei das Fernmittel (180) eine Internetseite aufweist.

7. Informationsverarbeitungssystem, das die nachfolgenden Elemente umfasst:
- einen Prozessor (150), der einen Antrag (151) von einem Benutzer auf ein Informationsmittel (185) empfängt,
- einen Sammler (170), der mit dem Prozessor (150) wirksam gekoppelt ist und einen Empfang einer Kopie (155) des Mittels (185) von einer Fernstelle ermöglicht, und
- ein Zwischenspeichersystem (100), das mit dem Prozessor (150) wirksam gekoppelt ist und eine Speicherung sowie eine Sammlung der Kopie (155) des Mittels (185) ermöglicht, wobei das Zwischenspeichersystem (100) die nachfolgenden Elemente umfasst: einen Zwischenspeicher (121-129) zur Speicherung der Kopie (155), und einen Zwischenspeichercontroller (110), der mit dem Zwischenspeicher (121-129) wirksam gekoppelt ist, zur Steuerung der Aussetzung der Kopie (155) in dem Zwischenspeicher (121-129) einer betreffenden Zwischenspeichermethode (280), und zwar in Abhängigkeit von einem betreffenden semantischen Typ des Mittels (185), **dadurch gekennzeichnet, dass** der betreffende semantische Typ indikativ ist für einen betreffenden Grad an Flüchtigkeit des Informationsinhaltes des Informationsmittels (185).

8. System nach Anspruch 7, wobei
- der Zwischenspeicher (121-129) eine Anzahl Zwischenspeichersektionen aufweist, und
- der Zwischenspeichercontroller (110) selektiv auf eine bestimmte Sektion der Zwischenspeichersektionen zugreift, und zwar in Abhängigkeit von dem semantischen Typ des Mittels (185).

9. System nach Anspruch 7, das weiterhin Folgendes umfasst:
- einen semantischen Klassifizierer (160), der mit dem Prozessor (150) wirksam gekoppelt ist und den semantischen Typ des Mittels (185) bestimmt.

10. System nach Anspruch 9, wobei der semantische Klassifizierer (160) den semantischen Typ bestimmt, und zwar auf Basis von wenigstens: einem Kontext des Benutzers, eines vorhergehenden Antrags des Benutzers, eines Profils des Benutzers, oder einer Reaktion vom Benutzer auf ein Ergebnis eines vorhergehenden Antrags vom Benutzer.

11. System nach Anspruch 9, wobei der semantische Klassifizierer (160) den semantischen Typ des Mittels (185) auf Basis eines materiellen Inhalts des Mittels (185) bestimmt.

12. Datei (180), die Folgendes umfasst:
- eine Anzahl Indizes entsprechend einer Anzahl Informationsmittel, und
- eine Anzahl semantischer Standardtypen entsprechend der Anzahl Informationsmittel, die das Aussetzen jedes betreffenden Informationsmittels (185) der Anzahl Informationsmittel zu einer betreffenden Zwischenspeichermethode, und zwar auf Basis des betreffenden semantischen Standardtyps jedes betreffenden Informationsmittels (185), **dadurch gekennzeichnet, dass** der betreffende semantische Typ indikativ ist für eine betreffenden Grad an Flüchtigkeit von Informationsinhalt des betreffenden Informationsmittels (185).

13. Webseite (180), die Folgendes umfasst: ein Informationsmittel (185), und eine Identifikation eines semantischen Typs, assoziiert mit dem Informationsmittel (185) zur Steuerung einer automatischen Verarbeitung der Webseite, **dadurch gekennzeichnet, dass** der semantische Typ indikativ ist für einen Grad an Flüchtigkeit eines Informationsinhalts des Informationsmittels (185).

## Revendications

1. Procédé de traitement d'une ressource d'informations (185), le procédé comprenant la réception (260) d'une copie (155) de la ressource d'informations (185) provenant d'une source distante (180), et la soumission de la copie (155) de la ressource d'informations (185) à une politique de mise en antémémoire respective (280) en fonction d'un type sémantique respectif associé à la ressource d'informations (185), **caractérisé en ce que** le type sémantique respectif est une indication d'un degré respectif de volatilité du contenu d'informations de la ressource d'informations (185).

2. Procédé suivant la revendication 1, dans lequel :
la mise en antémémoire (280) de la copie (155) comprend au moins l'un des points suivants : une mise en antémémoire statique, une mise en antémémoire active, et une mise en antémémoire à percolation.

3. Procédé suivant la revendication 1, comprenant en outre :
la réception (210) d'une demande (151) émanant d'un utilisateur, et
la détermination (220) du type sémantique sur la base de la demande (151) émanant de l'utilisateur.

4. Procédé suivant la revendication 3, dans lequel :
la détermination (220) du type sémantique comprend au moins une des étapes suivantes :
la détermination d'un contexte de la demande (151);
la détermination d'une demande précédente émanant de l'utilisateur;
la détermination d'un profil de l'utilisateur, et
la détermination d'une réponse émanant de l'utilisateur à un résultat d'une demande précédente.

5. Procédé suivant la revendication 1, comprenant en outre :
la détermination (270) du type sémantique sur la base d'un contenu d'informations de la ressource (185).

6. Procédé suivant la revendication 1, dans lequel :
la source distante (180) comprend un site Internet.

7. Système de traitement d'informations, comprenant :
un processeur (150) qui reçoit une demande (151) émanant d'un utilisateur pour une ressource d'informations (185);
un dispositif d'extraction (170), relié de manière à pouvoir fonctionner au processeur (150), lequel facilite une réception d'une copie (155) de la ressource (185) provenant d'un site distant, et
un système d'antémémoire (100), relié de manière à pouvoir fonctionner au processeur (150), qui facilite un stockage et une extraction de la copie (155) de la ressource (185), le système d'antémémoire (100) comprenant : une antémémoire (121-129) destinée à stocker la copie (155) et un contrôleur d'antémémoire (110), relié de manière à pouvoir fonctionner à l'antémémoire (121-129), destiné à commander la soumission de la copie (155) dans l'antémémoire (121-129) à une politique de mise en antémémoire respective (280) en fonction d'un type sémantique respectif de la ressource (185), **caractérisé en ce que** le type sémantique respectif est une indication d'un degré respectif de volatilité de contenu d'informations de la ressource d'informations (185).

8. Système suivant la revendication 7, dans lequel :
l'antémémoire (121-129) comprend une pluralité de sections d'antémémoire, et
le contrôleur d'antémémoire (110) accède de manière sélective à une section spécifique des sections d'antémémoire, en fonction du type sémantique de la ressource (185).

9. Système suivant la revendication 7, comprenant en outre :
un classifieur sémantique (160), relié de manière à pouvoir fonctionner au processeur (150), qui détermine le type sémantique de la ressource (185).

10. Système suivant la revendication 9, dans lequel :
le classifieur sémantique (160) détermine le type sémantique sur la base d'au moins un des points suivants : un contexte de l'utilisateur, une demande précédente de l'utilisateur, un profil de l'utilisateur, et une réponse de l'utilisateur à un résultat d'une demande précédente de l'utilisateur.

11. Système suivant la revendication 9, dans lequel :
le classifieur sémantique (160) détermine le type sémantique de la ressource (185), sur la base d'un contenu de matériau de la ressource (185).

12. Base de données (180), comprenant :
une pluralité d'index correspondant à une pluralité de ressources d'informations, et
une pluralité de types sémantiques par défaut correspondant à la pluralité de ressources d'informations, ce qui facilite la soumission de chaque ressource d'informations (185) de la pluralité des ressources d'informations à une politique de mise en antémémoire respective, sur la base du type sémantique par défaut respectif de chaque ressource d'informations (185), **caractérisé en ce que** le type sémantique respectif est une indication d'un degré respectif de volatilité du contenu d'informations de la ressource d'informations respective (185).

13. Page Web (180) comprenant :
une ressource d'informations (185), et
une identification d'un type sémantique associé à la ressource d'informations (185) pour commander un traitement automatique de la page Web, **caractérisé en ce que** le type sémantique est une indication d'un degré de volatilité d'un contenu d'informations de la ressource d'informations (185).
